(19) **Europäisches Patentamt**
**European Patent Office**
**Office européen des brevets**

(11) **EP 2 840 550 A1**

(12) **EUROPEAN PATENT APPLICATION**

(43) Date of publication:
**25.02.2015 Bulletin 2015/09**

(51) Int Cl.:
**G06T 7/00** (2006.01)

(21) Application number: **13180873.5**

(22) Date of filing: **19.08.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Delphi Technologies, Inc.
Troy MI 48007 (US)**

(72) Inventors:
• **Szumilas, Lech J.**
**42107 Wuppertal (DE)**
• **Meuter, Mirko**
**40699 Erkrath (DE)**

(74) Representative: **Neill, Andrew Peter**
**Delphi Diesel Systems**
**Patent Department**
**Courteney Road**
**Gillingham, Kent ME8 0RU (GB)**

(54) **Camera pose estimation**

(57)　A method of determining camera pose or change thereof, from a first image to a subsequent, second, image, comprising: i) selecting a number of point correspondences p and p', respectively from the first and second images, ii) measuring, estimating or assuming initial changes in one or more degrees of freedom of camera; and, iii) from said initial values, deriving iteratively the changes of camera pose with respect to each degree of freedom. The initial measured, estimated or assumed value of changes in camera motion may comprise forward motion.

FIG. 3

**Description**

**Field of the Invention**

This disclosure relates to a method of determining the pose and change of pose of a camera, and has particular but non-exclusive application to automotive cameras and image processing applications. The method has particular but non-exclusive application to determining the change in camera pose in six degrees of freedom.

**Background of the invention**

In modern vehicle systems it is known to utilise cameras mounted on vehicles for various purposes such as for providing security and safety system such as collision avoidance systems. In such systems, objects which may be stationary or moving, are tracked in order to determine potential hazards and to provide vehicles with information in general

In order to assist such systems it is necessary to determine camera movement. A camera mounted on a vehicle may be adapted to rotate relative to the vehicle or may be in fixed location to the vehicle. In either case, the movement of the camera may be regarded as translation of the camera, i.e. movement in three axes (x, y and z) and, in addition, the camera may rotate in threes axes (pitch, roll and yaw). Thus the camera (movement) can be defined as having 6 degrees of freedom. For fixed camera, e.g. forward looking cameras, the movement will be predominantly be translation in a forward direction (predominantly forward movement). Any rotational movement is likely to be predominantly a variation in pitch as would be encountered if a vehicle was passing over a ramp or up or down an incline.

Although sensors may be utilised to provide data relevant to camera movement, these are expensive and add to cost. It is known to utilise software based imaging techniques instead to determine camera motion. However current systems have a number of disadvantages.

The invention utilises software techniques including image processing techniques which uses viewed scenes, e.g. successive images, so as to produce a set of visual features, e.g. tracked in successive (or a sequence of) frames to estimate camera motion which can be regarded as a change in camera pose. Thus camera pose change between two successive views can be determined.

The methodology of the invention identifies a set or subset of visual features that represent static objects (static scene background) such as a tree, and identifies a subset of such visual features of all static elements of the scene.

Known methods of estimating camera pose change between two camera views commonly use a RANSAC algorithm. If two point correspondences (corresponding point pairs) can be determined in two successive images, this will provide data on camera motion. The term "point correspondences" refers to detectable points (e.g. pixels or clusters of pixels for example) in two or more images which represent the same object.

Using a number of given point correspondences, such RANSAC algorithms can estimate camera pose change. The RANSAC algorithm typically selects the point correspondences randomly. For such methods, a minimum number of points (point correspondences) to estimate camera pose (change) are required. In such algorithms there is a subsequent step which uses the estimated change in camera pose to determine, for a large set of identifiable points in the image, how many move according to the predicted fashion (i.e. in the same way). Thus in effect, this step determines how many of the remaining point correspondences agree with the estimated pose; these are referred to as "inliers". Reference to "inliers" hereinafter is to be interpreted as such. This procedure may be repeated several times and the estimate which obtains the highest support in terms of the among corresponding points (typically the highest number of inliers) is selected. The RANSAC procedure includes a refinement step where all inliers are used to compute (fine tune the final pose estimate). The most general minimal solution which is able to recover both intrinsic camera calibration parameters as well as all the degrees of freedom of the camera pose (3 rotations and 3 translations) is known as an "eight point algorithm", and require eight corresponding (pairs) of points to compute camera pose change between two camera views.

A five point algorithm has also been developed (Nister2004) if the camera intrinsic parameters are known.

It is an object of the invention to provide a more efficient method to determine camera pose. It is further an object of the invention to provide a method which can use less than 5 point correspondences to determine camera pose changes. The term pose refers to the relative changes in camera orientation and translation. The absolute distance travelled by camera between two frames can be obtained e.g. from additional sensors e.g. odometry or if some special markers are present in the scene or other objects whose dimensions we know. Relative pose is sufficient for many real applications e.g. tracking moving objects, lane departure warning (here mostly estimated angles are used). For other applications it is usually sufficient to use velocity sensors to convert translation to metric values.

**Summary of the Invention**

In one aspect of the invention is provided a method of determining camera pose or change thereof, from a first image to a subsequent, second, image, comprising: i) selecting a number of point correspondences p and p', respectively from the first and second images, ii) measuring, estimating or assuming initial changes in one or more degrees of freedom of camera; and, iii) from said initial values, deriving iteratively the changes of camera pose with respect to each degree of freedom.

The method may include repeating step i) with a new set of point correspondences and using the results from said processes to refine the determined values of the changes in camera pose.The additional step may be repeated at each iteration

The camera may have six degrees of freedom and the changes in camera pose determined comprises changes with respect to three translation component ($t_1$ $t_2$ $t_3$), and pitch, roll and yaw ($\alpha$, $\beta$, $\zeta$) respectively.

The initial measured, estimated or assumed value of changes in camera motion may comprise forward motion $t_3$.

The camera may be mounted on a vehicle.

The initial forward motion of the camera may be determined from the expected, measured or estimated forward motion of the vehicle.

The method may use camera intrinsic parameters.

The method may include determining the canonical point co-ordinates corresponding to the point correspondences.

Determining canonical point co-ordinates, u, may be determined from $u = K^{-1}p$ where K is a matrix of camera intrinsic parameters and p are point correspondences.

Determining changes in camera pose may comprise determining those values thereof which minimise the sum of the errors, said errors in the value of p' and those computed for p' using said being values, for each set of point correspondences used in the determination.

The method may use said initial values to determine the values of components of the Essential matrix E, where $u'^T Eu = 0$, and consequently determining the values of epipolar error ($e_i$) for each selected correspondences, and, iteratively determining the changes in camera pose which minimise said error derivatives.

The computed values changes of camera pose may be applied to a larger set of point correspondences, and the number of inliers determined.

Steps i) to iii) may be repeated for one or more sets of point correspondences.

Steps i) to iii) may be repeated until a predetermined amount or proportion of inliers are found.

The method may include an initial step of pre-selecting point correspondences used on the basis of the assumption of movement of the camera.

The method may include an initial step of pre-selecting point correspondences used, based upon spatial filtering.

The inventor has determined that if the dominant camera motion is estimated or known (e.g. a priori) it provides for a method which is far more efficient than prior art methods. For example camera mounted on a vehicle undergoes mostly forward motion and there is only limited amount of yaw, pitch, roll and side-ways motion. Using estimated, measured or assumed values for motion in (at least) one axis allows an initialization process which further provides more efficient methodology and also provides for a solution to be found with less than 5 points.

## Brief Description of Drawings

The present invention will now be described by way of example with reference to the accompanying drawings of which:

Figure 1 illustrates a co-ordinate system showing rotation around a main axis.

Figure 2 illustrates how image points (point correspondences) p and p' are projected in two views after alteration of camera pose.

Figure 3 shows a chart illustrating the methodology according to a basic example of the invention.

Figure 4 shows a chart illustrating the methodology according to a refined example of the invention.

Figure 5 shows a chart illustrating the methodology according to a refined example of the invention.

## Mathematical Background

For the understanding of the implementation of the invention, the following gives the mathematical background of the invention.

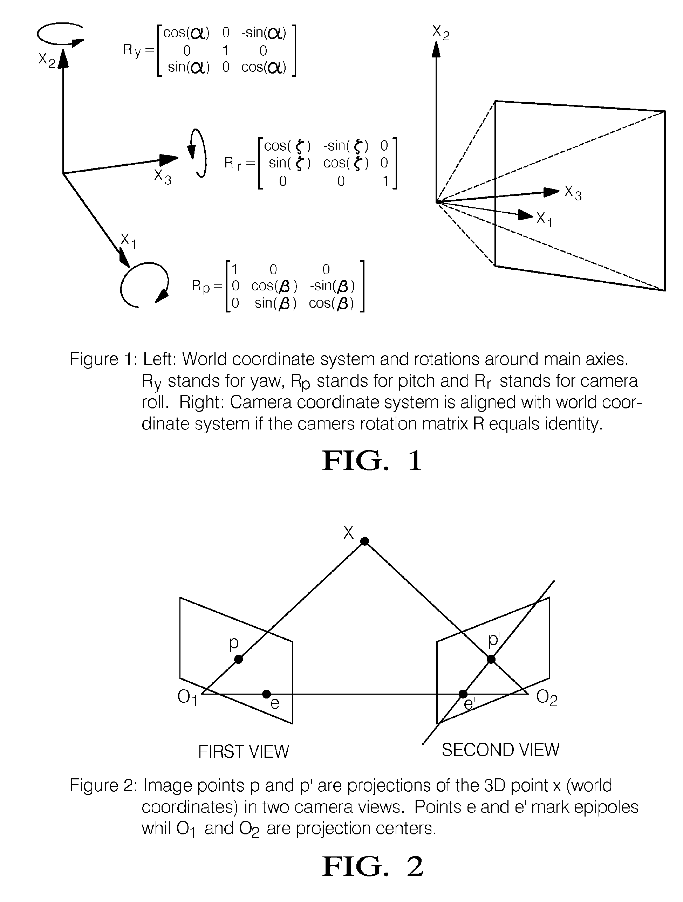

Figure 1 shows a world coordinate system and defines rotations around main axes, as used hereinafter World coordinate system and rotations around main axes. $R_y$ stands for yaw, $R_p$ stands for pitch and $R_r$ stands for camera roll. Camera coordinate system is aligned with world coordinate system if the camera rotation matrix $R$ equals identity.

The overall camera rotation matrix is obtained as follows:

$$R = R_y R_p R_r \qquad (1)$$

The method of camera pose estimation presented in this invention assumes prior knowledge of geometrical properties of camera in use. These properties describe radial distortions of the camera lens and camera intrinsic parameters explained later in this section. These allow converting camera images and image coordinates to agree with a Pinhole camera model - a camera containing an infinitely small hole instead of a lens as shown in the Figure below. The pose estimation operates under assumption that provided data conforms to the Pinhole camera model. Therefore the conversion process must take place before execution of the camera pose estimator.

Due to its design and manufacturing imperfections all lenses introduce certain amount of geometrical distortions into the resulting image - primarily so called radial distortions. These distortions can be measured and corrected in a multitude of ways that has been broadly described in the photogrammetric and computer vision literature. The method of camera pose estimation presented in this invention does not depend on a specific method of removing lens distortions. Here, we simply assume that either the image or image points have been undistorted prior to the execution of camera pose estimator.

Camera intrinsic parameters allow to convert undistorted image or points in the image into so called canonical coordinates that conform to the Pinhole camera model. These parameters encode the following properties:

- Focal length $f$ : the distance between the centre of projection and the retinal plane (projection plane or camera sensor)
- Physical width and height of the pixel in camera image sensor $[p_u, p_v]$, then $m_u = 1/p_u$ and $m_v = 1/p_v$
- Principal point $[m_u t_u, m_v t_v]$, where $t_u$ and $t_v$ define location of principal point in image coordinates.
- Skew factor $s$ accounting for possibility of inaccurate positioning of image sensor with regard to the lens.

Camera intrinsic parameters are typically provided in the form of matrix $K$:

$$K = \begin{bmatrix} m_u f & s & m_u t_u \\ 0 & m_v f & m_v t_v \\ 0 & 0 & 1 \end{bmatrix} \qquad (2)$$

where $f$ is a focal length of the camera lens, s defines a skew factor, $m_u$ and $m_v$ provide metric sensor size to pixel resolution ratio (pixel/inch while $m_u t_u$ and $m_v t_v$ define location of the image plane center in pixel coordinates.

Further details can be found in the following publications: Richard Hartley and Andrew Zisserman. Multiple View Geometry in Computer Vision. 2nd edition. Chapter 6 - Camera Models; and Richard Szeliski. Computer Vision, Algorithms and Applications. Chapter 2.1.5 3D to 2D Projections. Section "Camera intrinsics".

In one embodiment, the methodology operates on canonical point coordinates which are obtained by multiplying homogeneous image coordinates by the inverse of camera intrinsic matrix $K$ as follows:

$$u = K^{-1} p \qquad (3)$$

where $p = [x_1, x_2, 1]$ are homogeneous image coordinates (in pixels) captured by arbitrarily rotated camera and $u = [u_1, u_2, 1]$ represents canonical image coordinates. Preferably image points are be radially undistorted before converting to canonical coordinates.

The camera matrix $C$ combines camera rotation and translation as follows:

$$C = (R|t) \qquad (4)$$

where $t$ is a translation vector.

### 3. Minimal Solution

Let as assume that a set of 3D points $X$ is projected into two camera views resulting in two sets of projected points $P$ and $P'$. Every point $x \in X$ is projected onto a pair of corresponding points as shown in figure 2. It is then possible to estimate camera pose i.e. relative translation and rotation between two camera views, given a sufficient number of projections.

Any two corresponding points $p$ and $p'$ are related by the following Epipolar constraint:

$$u'^{T} E u = 0 \qquad (5)$$

T is transposition: column vector is transposed to a row vector (standard math notations) where $u$ and $u'$ are canonical representations of points $p$ and $p'$; and $E$ represents the Essential matrix of the following form:

$$E = R[t]_x \qquad (6)$$

where $[t]_x$ is a skew symmetric matrix of vector $t$:

$$[t]_x = \begin{bmatrix} 0 & -t_3 & t_2 \\ t_3 & 0 & -t_1 \\ -t_2 & t_1 & 0 \end{bmatrix} \qquad (7)$$

The above matrix provides just a general definition.

Our goal is to recover Essential matrix which encodes relative camera pose. The Epipolar constraint in equation 5 gives a basis for estimation of matrix $E$. Nister has shown that $E$ can be estimated from five point correspondences which is minimal number of points required to estimate six degrees of freedom (DOF) motion in a general case.

However, according to one aspect of the invention, if the dominant motion of the camera is assumed or estimated or measured, this parameter is used and is possible to estimate $E$ using an arbitrary number of points and non-linear, iterative least squares optimization procedure. In fact, we can directly estimate three translation components and three rotation angles as it is shown later in this section.

Non-linear least squares (NLLS) is a well known method for estimating unknown model parameters (camera pose) given a set of observations (point correspondences). NLLS attempts to fit the model into observations by minimizing a sum of squared errors which in our case can be written as follows:

$$S = \sum_i e_i^2 \qquad (8a)$$

where $e_i$ measures error produced by $i$-th point correspondence

$$e_i = u_i'^{T} E u_i. \qquad \text{(Equation 8b)}$$

Note that $e_i$ applies Epipolar constraint to measure the degree to which a particular camera pose parameters encodedin $E$ fit the data.

Example of the Invention

Rather than determining from complex methodology all 9 parameters of the $3 \times 3$ Essential matrix, as in the prior art, in one embodiment of the invention, one of the parameters of the three translation components $t_1$, $t_2$, $t_3$ and three rotation components $\alpha$, $\beta$, $\zeta$ of the camera pose is estimated, measured or assumed beforehand and used to initialise and determine initial values. As the largest change in camera pose will be forward movement of the camera as a result of forward movement of the vehicle, it is this parameter $t_3$ which is set to a non-zero value initially.

NLLS is an iterative procedure that in the most basic form requires evaluation of error measures $e_i$ and their derivatives i.e. $\partial e_i/\partial t_1$, $\partial e_i/\partial t_2$, $\partial e_i/\partial t_3$, $\partial e_i/\partial \alpha$, $\partial e\_i/\partial beta$ and $\partial e_i/\partial \zeta$ at each iteration. Both, error measure and its derivatives can be derived symbolically as in the equations that follow.

Initialisation

In one embodiment we set $t_1 = 0$, $t_2 = 0$, $t_3 = 1$, $\alpha = 0$, $\beta = 0$, $\zeta = 0$ . The fact that $t_3 = 1$, indicates there is forward translation motion) and determine the components of the matrix E as below From 6, 1 and 7 we obtain the following components of matrix **E**:

$$E_{11} = t_3\big(-\cos(\alpha)\sin(\zeta) - \sin(\alpha)\sin(\beta)\cos(\zeta)\big) \\ + \sin(\alpha)\cos(\underline{e}ta)\,t_2 \tag{9}$$

$$E_{12} = -t_3\big(\cos(\alpha)\cos(\zeta) - \sin(\alpha)\sin(\beta)\sin(\zeta)\big) \\ - \sin(\alpha)\cos(beta)\,t_1 \tag{10}$$

$$E_{13} = t_2\big(\cos(\alpha)\cos(\zeta) - \sin(\alpha)\sin(\beta)\sin(\zeta)\big) \\ - t_1\big(-\cos(\alpha)\sin(\zeta) - \sin(\alpha)\sin(\beta)\cos(\zeta)\big) \tag{11}$$

$$E_{21} = \cos(\beta)\,t_3\cos(\zeta) + \sin(\beta)\,t_2 \tag{12}$$

$$E_{22} = -\cos(\beta)\,t_3\sin(\zeta) - \sin(\beta)\,t_1 \tag{13}$$

$$E_{23} = \cos(\beta)\,t_2\sin(\zeta) - \cos(\beta)\,t_1\cos(\zeta) \tag{14}$$

$$E_{31} = t_3\big(\cos(\alpha)\sin(\beta)\cos(\zeta) - \sin(\alpha)\sin(\zeta)\big) \\ - \cos(\alpha)\cos(\underline{e}ta)\,t_2 \tag{15}$$

$$E_{32} = \cos(\alpha)\cos(\beta)\,t_1 \\ - t_3\big(\cos(\alpha)\sin(\beta)\sin(\zeta) + \sin(\alpha)\cos(\zeta)\big) \tag{16}$$

$$E_{33} = t_2 \Big( \cos(\alpha) \sin(\beta) \sin(\zeta) + \sin(\alpha) \cos(\zeta) \Big)$$
$$- t_1 \Big( \cos(\alpha) \sin(\beta) \cos(\zeta) - \sin(\alpha) \sin(\zeta) \Big) \tag{17}$$

The Epipolar error can be written as:

$$
\begin{aligned}
e_i = \quad & u'_{i,1}\big(E_{11} u_{i,1} + E_{12} u_{i,2} + E_{13} u_{i,3}\big) + \\
& u'_{i,2}\big(E_{21} u_{i,1} + E_{22} u_{i,2} + E_{23} u_{i,3}\big) + \\
& u'_{i,3}\big(E_{31} u_{i,1} + E_{32} u_{i,2} + E_{33} u_{i,3}\big)
\end{aligned}
\tag{18}
$$

assuming $u_i = [u_{i,1}, u_{i,2}, u_{i,3}]$.

A symbolic representation of error derivatives can be easily obtained using one of symbolic math tools such as Maxima, Mathematica or others. In the next stage the values of $t_1$ $t_2$, $t_3$ $\alpha$, $\beta$, $\zeta$ are and/or the components of E are varied to reduce the sum of the errors. When the sum of the errors is reduced to a pre-determined level, the values of $t_1$ $t_2$, $t_3$ $\alpha$, $\beta$, $\zeta$ are output and these are the computed values. This procedure may be carried out iteratively, for example by varying slightly the variables and seeing its effect on the errors.

Various iterative methods of implementing such a procedure are known such as NNLS. NLLS procedure can be carried out using many of freely available implementations of this method e.g GNU Scientific Library, Alglib and others. Thus according to a simple embodiment of the invention, in case of forward looking camera mounted on a car we can use a forward motion assumption $t_1 = 0$, $t_2 = 0$, $t_3 = 1$, $\alpha = 0$, $\beta = 0$, $\zeta = 0$ or use other sensor such as velocity and yaw sensors often present in modern cars to obtain a coarse values of the camera pose parameters. In other words rather than determining from the complex methodology all 9 parameters of the 3 × 3 Essential matrix from point correspondences, an initial step is to estimate beforehand the values of $t_1$, $t_2$, $t_3$, $\alpha$, etc. At least one of these values (e.g. $t_3$ = forward motion) is not initialised at zero e.g. $t_1 = 0$, $t_2 = 0$, $t_3 = 1$, $\alpha = 0$, $\beta = 0$, $\zeta = 0$. This allows initial values of $E_{11}$, $E_{12,}$ etc, to be determined. In this example substituting these values into the equations 9 to 17 gives the values as in the matrix $[t]_x$ in equation 7.

These values will be adjusted by NLLS in the course of iteration. Thus, E is recomputed using equations 9-17 at each iteration.

Note that camera pose estimation is performed up to an unknown scale factor and therefore it is not necessary to provide absolute values of the translation components.

Although the above embodiment assumes just forward motion, the methodology does not have to use just one parameter. Any combination of the parameters can be used if we have any prior knowledge on camera motion. Normally it is sufficient just to initialize $t_3$ because all other parameters are constrained in the case of car.

Thus in embodiments of the invention, methods such as NLLS nay use initialised parameters; the parameters being initialized with some guessed or measured values. NLLS then iteratively estimates all of these parameters. Thus, at the end of the NLLS computations we expect parameter values to reflect a true camera motion.

**Methodology Implementation**

Before the implementing the methodology, the camera is calibrated (ones) and intrinsic parameters stored. The camera intrinsic parameters (matrix K) may be determined (e.g. by calibration) and may be stored beforehand.

The first step involves taking a random selection of point correspondences from the two views, which for each pair can be considered are p and p'.

In the next step, the corresponding canonical point coordinates are determined by applying the inverse of the matrix K with the point correspondences.

$$u = K^{-1} p$$

The next step is to provide initial essential (matrix) E components values as described above. For example the

values $E_{11}$, $E_{12}$, $E_{13}$, $E_{21}$, $E_{22}$, $E_{23}$, $E_{31}$, $E_{32}$, $E_{33}$ are determined from equations to (9) to (17) above.

As mentioned for this step the values of (at least one) translation components $t_1$, $t_2$, $t_3$ and three rotation components $\alpha$, $\beta$, $\zeta$ of the camera pose can be estimated beforehand. In a simple and preferred embodiment the value of the (forward) motion in one direction is determined/estimated $t_3$ and the remaining values of $t1$ *and* $t2$ and three rotation components $\alpha$, $\beta$, $\zeta$ are set to zero.

The next step is to determine the Epipolar error from equation for each point correspondence (10)

The next step is to determine the revised parameters $t_1$, $t_2$, $t_3$ $\alpha$, $\beta$, $\zeta$ whose sum of squared errors $e_i$ for each point correspondence is minimal. Various known techniques can be used in this step. Non -linear least squares (NLLS) may be used which is a well- known method for estimating unknown model parameters. NLLS iterates in order to estimate translation and rotation angles. Therefore t1-t3 and angles are gradually adjusted and E re-estimated at each iteration step.

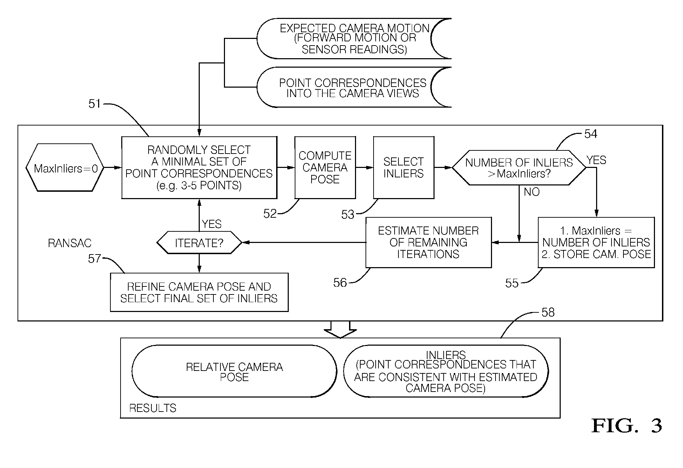

Figure 3 illustrates how such a method may be implemented. The inputs to the system are expected camera motion (e.g. forward motion or motion sensor readings). The first two steps S1 and S2 are implemented according to the method as described above. The results of the methodology described above provide values for of translation components $t_1$, $t_2$, $t_3$ and three rotation components $\alpha$, $\beta$, $\zeta$. These are then used with the whole (or larger) set of point correspondences to determine the number of inliers, i.e. those point correspondences that correspond to the determined predicted camera motion, at step S3. Of course in practice this may involve determining if they lie within a predetermined error threshold. At step S4, if the number of inliers (point correspondences) is above a threshold number the largest number of inliers identified so far, then this is recorded and the camera pose changes are stored in step S5. The next step is to determine the number of iterations at step S6. There are various ways in which this can be done. The paper B. J. Tordo and D. W. Murray, Guided-MLESAC: Faster image transform estimation by using matching priors, IEEE Transactions on Pattern Analysis and Machine Intelligence 27 (2005), no. 10, 1523 {1535} provides a general discussion on computing number of iterations for RANSAC. There exist many ways of computing this number but this approach does not depend on a specific one.

## Summary

In summary the following steps are taken:

1. Assumed or guessed are one or more translations or rotation angles.

2. NLLS computes E from the parameter $t_1$, $t_2$, $t_3$ $\alpha$, $\beta$, $\zeta$

3. The errors (the degree to which E fits actual data) are computed.

4. NLLS computes a new E that reduces errors i.e. fits better to the actual data than before. This process is repeated iteratively. In other words if the errors exceed some threshold NLLS repeats the procedure.

5. The corresponding values of three translation components $t_1$, $t_2$, $t_3$ and three rotation components $\alpha$, $\beta$, $\zeta$ *are output.*

The pose refinement step re-estimates camera pose using all identified inliers. It uses the same pose estimation method as used throughout RANSAC and described in the "Minimal solution" section. The only difference is that inside the RANSAC procedure pose estimation is performed on a small number of point correspondences (typically 3 or 4) while in the refinement step all inliers are used.

Since the pose estimation is based on iterative least squares procedure it can take any number of point correspondences. More points will typically yield a better accuracy.

If it is decided to iterate then the process may be repeated with a further random selection of point correspondences. The process is repeated.

Thus, if it is determined to provide another iteration, the above process is repeated with a different - possibly random - selection of point correspondences and the number of inliers determined as before.

There may be a refinement step S7. The methodology may average out parameters obtained from each process where different set of point correspondences are used or even weight the parameters according to the number of inliers. As mentioned information concerning the known dominant motion of the camera is used . In this preferred embodiment, the value of forward motion is used to estimate/determine a value for $t_3$. Thus in one example the deals with a specific case where we know or guess a priori a dominant camera motion. For example camera mounted on a vehicle undergoes mostly forward motion and there is only limited amount of yaw, pitch, roll and side-ways motion.

The methodology according to aspects of the invention allows the use of less than 5 points to estimate 6DOF camera pose; using less points is more efficient. For example the methodology may use only 3 points. In one aspect therefore, the expected/dominant motion parameters are given; a rough camera pose is provided beforehand. Even if the vehicle has no sensors at all to estimate initial changes in pose such as forward motion, in an example the camera is assumed to move forward. The algorithm will then estimate all pose components assuming that the camera motion is not drastically different from the expected one. If the vehicle is equipped with some sensors (e.g. speed, yaw) then these can be used to improve both accuracy and efficiency of the algorithm. The use of sensors or simply assuming a dominant motion allows improved camera pose estimation based on application specific constraints. Filtering image (point) correspondences before camera pose is estimated which improves efficiency of the pose estimation. As mentioned algorithms exist that use less than 5 points and allow estimation of camera pose with less than 6DOF camera pose e.g. 3 points are needed to estimate 4DOF camera pose if the camera up-vector is known. In this case, the camera up-vector needs to be given precisely or the accuracy of the method will be poor. In contrast, the claimed method requires only a very rough guess on what we expect of camera pose while to following estimation of camera pose is not limited to 4DOF.

Further Embodiment

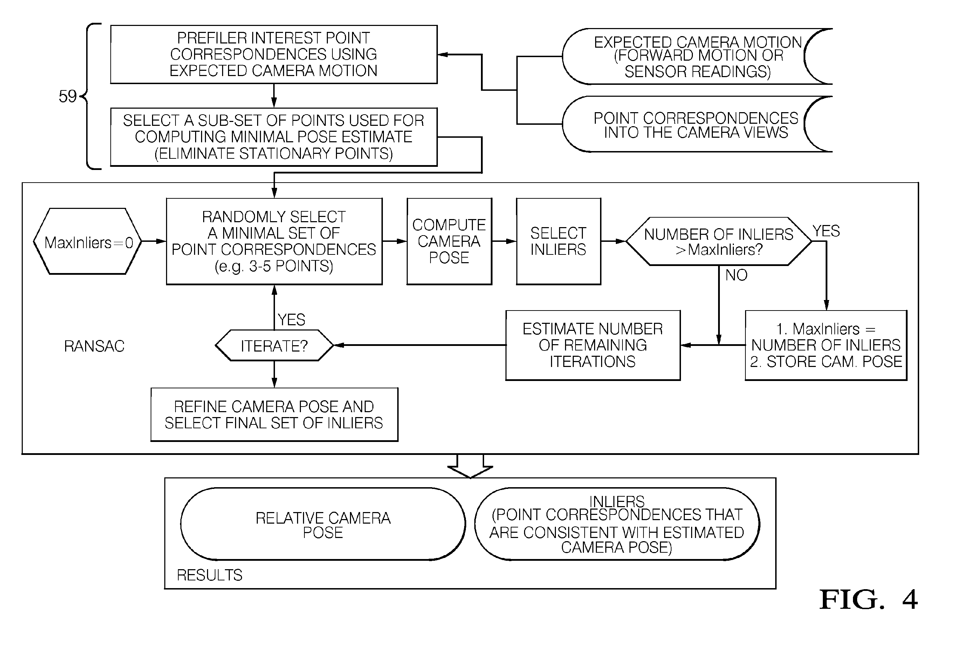

Figure 4 shows a preferred embodiment where the expected camera motion (e.g. forward motion) can be used in the actual selection of point correspondences used in the methodology. In a preferred embodiment, again this is the translation in one dimension (forward motion). Again this value can be determined or estimated by any appropriate method such as by using a motion sensor. Alternative this parameter can be determined from previous motion, speed measurements of the vehicle etc.

Essentially in this preferred embodiment the point correspondences are pre-filtered using the parameter of expected motion so as to select a subset of points which is input into the above procedure described above. The way this can be performed is to select those point correspondences which move in a similar fashion, or the same expected fashion, according to the expected camera motion. Thus essentially, the expected camera motion such as forward motion can be used to pre-filter point correspondences. Thus if camera movement is known for stationary points, the point correspondences should appear at particular computed co-ordinates in subsequent images. Point correspondences can be filtered based on the minimum distance from the expected co-ordinates. The pre-filtering step reduces rogue point correspondences. This allows selection of a sub-set of points which are used by the later methodology e.g. RANSAC type algorithm. The additional steps are shown by reference S9. The remaining steps are as described before.

Further Embodiment

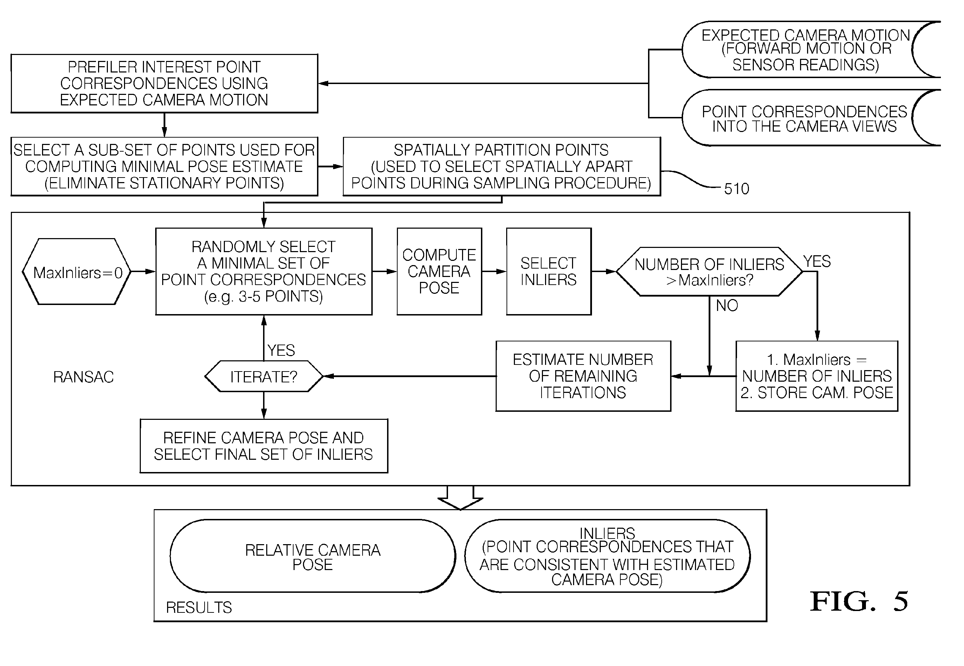

In a further embodiments, further refinement steps can be used whereby the selected points are spatially partitioned or "spatially filtered". These are shown in figure 5. It is preferable that the selected point correspondences are spaced apart, so for example this step may comprise selecting correspondences from each/spaced quadrant or portions of the camera image. Alternatively and additionally, this step may involve ensuring that those point correspondences in the centre of the image are not considered (i.e. used) but instead more peripheral points are selected. This is because peripheral points give more accurate and meaningful data with regard camera motion and also central selected point are less informative in case of forward moving camera Alternatively and/or additionally partitioning can avoid clusters. Partitioning can be performed by dividing the image into cells.

**Claims**

1. A method of determining camera pose or change thereof, from a first image to a subsequent, second, image, comprising:

   i) selecting a number of point correspondences p and p', respectively from the first and second images,
   ii) measuring, estimating or assuming initial changes in one or more degrees of freedom of camera;
   iii) from said initial values, deriving iteratively the changes of camera pose with respect to each degree of freedom.

2. A method as claimed in claim 1 including repeating step i) with a new set of point correspondences and using the results from said processes to refine the determined values of the changes in camera pose.

3. A method as claimed in claim 2 wherein said additional step of claim 2 is repeated at each iteration

4. A method as claimed in claims 1 or 2 wherein the camera has six degrees of freedom and the changes in camera pose determined comprises changes with respect to three translation component ($t_1$ $t_2$ $t_3$), and pitch, roll and yaw ($\alpha$, $\beta$, $\zeta$) respectively.

5. A method as claimed in claims 1 to 4 wherein the initial measured, estimated or assumed value of changes in camera motion comprises forward motion $\mathbf{t}_3$.

6. A method as claimed in claims 1 to 5 wherein said camera is mounted on a vehicle.

7. A method as claimed in claims 1 to 6 wherein initial forward motion of the camera is determined from the expected, measured or estimated forward motion of the vehicle.

8. A method as claimed in claims 1 to 7 wherein said method uses camera intrinsic parameters.

9. A method as claimed in claims 1 to 8 wherein including determining the canonical point coordinates corresponding to the point correspondences.

10. A method as claimed in claims 1 to 9 wherein determining canonical point co-ordinates, u, are determined from $\mathbf{u} = \mathbf{K}^{-1}\mathbf{p}$ where K is a matrix of camera intrinsic parameters and p are point correspondences.

11. A method as claimed in claims 1 to 10 wherein determining changes in camera pose comprises determining those values thereof which minimise the sum of the errors, said errors in the value of p' and those computed for p' using said being values, for each set of point correspondences used in the determination.

12. A method as claimed in any preceding claim comprising;

   a) using said initial values to determine the values of components of the Essential matrix E, where $\mathbf{u}'^T \mathbf{E}\mathbf{u} = 0$, and
   b) consequently determining the values of epipolar error ($e_i$ ) for each selected correspondences,
   c) iteratively determining the changes in camera pose which minimise said error derivatives.

13. A method as claimed in claims 1 to 12 wherein computed values changes of camera pose are applied to a larger set of point correspondences, and the number of inliers determined.

14. A method as claimed in claims 1 to 13 wherein steps i) to iii) are repeated for one or more sets of point correspondences.

15. A method as claimed in claim 1 to 14 wherein steps i) to iii) are repeated until a predetermined amount or proportion of inliers are found.

16. A method as claimed in claims 1 to 15 wherein including an initial step of pre-selecting point correspondences used on the basis of the assumption of movement of the camera.

17. A method as claimed in claims 1 to 16 including an initial step of pre-selecting point correspondences used, based upon spatial filtering.

$$R_y = \begin{bmatrix} \cos(\alpha) & 0 & -\sin(\alpha) \\ 0 & 1 & 0 \\ \sin(\alpha) & 0 & \cos(\alpha) \end{bmatrix}$$

$$R_r = \begin{bmatrix} \cos(\zeta) & -\sin(\zeta) & 0 \\ \sin(\zeta) & \cos(\zeta) & 0 \\ 0 & 0 & 1 \end{bmatrix}$$

$$R_p = \begin{bmatrix} 1 & 0 & 0 \\ 0 & \cos(\beta) & -\sin(\beta) \\ 0 & \sin(\beta) & \cos(\beta) \end{bmatrix}$$

Figure 1: Left: World coordinate system and rotations around main axies. $R_y$ stands for yaw, $R_p$ stands for pitch and $R_r$ stands for camera roll. Right: Camera coordinate system is aligned with world coordinate system if the camers rotation matrix R equals identity.

## FIG. 1

Figure 2: Image points p and p' are projections of the 3D point x (world coordinates) in two camera views. Points e and e' mark epipoles whil $O_1$ and $O_2$ are projection centers.

## FIG. 2

EXPECTED CAMERA MOTION
(FORWARD MOTION OR
SENSOR READINGS)

POINT CORRESPONDENCES
INTO THE CAMERA VIEWS

51

MaxInliers=0

RANDOMLY SELECT
A MINIMAL SET OF
POINT CORRESPONDENCES
(e.g. 3-5 POINTS)

COMPUTE
CAMERA
POSE

SELECT
INLIERS

54

NUMBER OF INLIERS
>MaxInliers?

YES

NO

52

53

YES

RANSAC

ITERATE?

ESTIMATE NUMBER
OF REMAINING
ITERATIONS

1. MaxInliers =
NUMBER OF INLIERS
2. STORE CAM. POSE

57

REFINE CAMERA POSE AND
SELECT FINAL SET OF INLIERS

56

55

58

RELATIVE CAMERA
POSE

INLIERS
(POINT CORRESPONDENCES THAT
ARE CONSISTENT WITH ESTIMATED
CAMERA POSE)

RESULTS

**FIG. 3**

FIG. 4

EP 2 840 550 A1

PREFILER INTEREST POINT
CORRESPONDENCES USING
EXPECTED CAMERA MOTION

EXPECTED CAMERA MOTION
(FORWARD MOTION OR
SENSOR READINGS)

POINT CORRESPONDENCES
INTO THE CAMERA VIEWS

SELECT A SUB-SET OF POINTS USED FOR
COMPUTING MINIMAL POSE ESTIMATE
(ELIMINATE STATIONARY POINTS)

SPATIALLY PARTITION POINTS
(USED TO SELECT SPATIALLY APART
POINTS DURING SAMPLING PROCEDURE)

510

RANSAC

MaxInliers=0

RANDOMLY SELECT
A MINIMAL SET OF
POINT CORRESPONDENCES
(e.g. 3-5 POINTS)

COMPUTE
CAMERA
POSE

SELECT
INLIERS

NUMBER OF INLIERS
>MaxInliers?

YES

NO

1. MaxInliers =
NUMBER OF INLIERS
2. STORE CAM. POSE

YES

ITERATE?

ESTIMATE NUMBER
OF REMAINING
ITERATIONS

REFINE CAMERA POSE AND
SELECT FINAL SET OF INLIERS

RESULTS

RELATIVE CAMERA
POSE

INLIERS
(POINT CORRESPONDENCES THAT
ARE CONSISTENT WITH ESTIMATED
CAMERA POSE)

FIG. 5

Europäisches
Patentamt

European
Patent Office

Office européen
des brevets

**EUROPEAN SEARCH REPORT**

Application Number

EP 13 18 0873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/044218 A1 (SAAB AB [SE]; MODEN ANDERS [SE]) 5 April 2012 (2012-04-05) | 1-4,6, 8-15 | INV. G06T7/00 |
| Y | * page 6, line 17 - page 23, line 32 * ----- | 5,7 | |
| X | US 2009/207257 A1 (JUNG SANG-HACK [US] ET AL) 20 August 2009 (2009-08-20) | 1,4,9-15 | |
| Y | * paragraph [0019] - paragraph [0038] * ----- | 5,7 | |
| Y | US 2010/220173 A1 (ANGUELOV DRAGOMIR D [US] ET AL) 2 September 2010 (2010-09-02) * paragraph [0046] * * paragraph [0065] * * paragraph [0081] * ----- | 5,7 | |
| A | DAVIDE SCARAMUZZA ET AL: "Visual Odometry [Tutorial]", IEEE ROBOTICS & AUTOMATION MAGAZINE, IEEE SERVICE CENTER, PISCATAWAY, NJ, US, vol. 18, no. 4, 1 December 2011 (2011-12-01), pages 80-92, XP011387821, ISSN: 1070-9932, DOI: 10.1109/MRA.2011.943233 * the whole document * ----- | 1-15 | |
| | | | TECHNICAL FIELDS SEARCHED (IPC) G06T |

The present search report has been drawn up for all claims

| Place of search | Date of completion of the search | Examiner |
|---|---|---|
| Munich | 21 October 2013 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 18 0873

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2013

| Patent document cited in search report | Publication date | Patent family member(s) | Publication date |
|---|---|---|---|
| WO 2012044218 A1 | 05-04-2012 | EP 2622573 A1<br>WO 2012044218 A1 | 07-08-2013<br>05-04-2012 |
| US 2009207257 A1 | 20-08-2009 | NONE | |
| US 2010220173 A1 | 02-09-2010 | EP 2399239 A1<br>US 2010220173 A1<br>WO 2010096670 A1 | 28-12-2011<br>02-09-2010<br>26-08-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RICHARD HARTLEY ; ANDREW ZISSERMAN.** Multiple View Geometry in Computer Vision
- **CAMERA MODELS ; RICHARD SZELISKI.** Computer Vision, Algorithms and Applications

- **B. J. TORDO ; D. W. MURRAY.** Guided-MLESAC: Faster image transform estimation by using matching priors. *IEEE Transactions on Pattern Analysis and Machine Intelligence,* 2005, vol. 27 (10), 1523-1535